# FASCICULE DE BREVET EUROPEEN

(11) **EP 4 265 550 B1**
(45) Date de publication et mention de la délivrance du brevet: **06.05.2026**
(21) Numéro de dépôt: 23164197.8
(22) Date de dépôt: 24.03.2023
(51) Int. Cl.: B65H 49/20, B65H 49/32, B65H 49/36, B65H 49/38, H02G 11/02

(54) **DISPOSITIF DE STOCKAGE, TRANSPORT ET INSTALLATION DE FILS ET CÂBLES ÉLECTRIQUES**
VORRICHTUNG ZUM LAGERN, TRANSPORTIEREN UND INSTALLIEREN VON ELEKTRISCHEN DRÄHTEN UND KABELN
DEVICE FOR STORING, TRANSPORTING AND INSTALLING ELECTRICAL WIRES AND CABLES

(30) Priorité: 19.04.2022 FR 2203599
(43) Date de publication de la demande: 25.10.2023
(60) Demande divisionnaire: 26158805.7
(73) Titulaire: Nexans, 92400 Courbevoie (FR)
(72) Inventeur: DEMULE, Christophe, 71190 LAIZY (FR); BRIN, Julien, 69720 SAINT BONNET DE MURE (FR); SIMON, Thibaud, 69006 LYON (FR); DELWAL, Fabien, 01320 CHALAMONT (FR)
(74) Mandataire: Cabinet Boettcher

(56) Documents cités:
- EP-A1- 2 017 211
- WO-A1-98/42609
- US-A1- 2011 101 148

## Description

La présente invention se rapporte à un dispositif de stockage, transport et installation de fils et câbles électriques.

L'invention appartient au domaine des équipements pour fils électriques et câbles électriques dans des secteurs variés, tels le bâtiment ou l'industrie.

Lorsqu'un électricien installe des fils ou des câbles électriques, il utilise généralement des bobines de fil ou câble emballées dans des feuilles de plastique.

Ce type d'emballage comporte un certain nombre d'inconvénients.

Tout d'abord, le fil ou câble étant déroulé à partir de l'intérieur de la bobine, il subit un entortillement progressif qui rend l'installation plus longue et augmente d'autant le coût de celle-ci.

En outre, une fois la phase d'installation achevée et les emballages ne contenant plus de fil ou câble, l'installateur doit gérer le processus de recyclage du plastique des emballages, ce qui est coûteux en temps et en argent.

Par ailleurs, la voiture ou camionnette de l'installateur est généralement petite et le stockage des produits pose problème du fait de leur encombrement. A titre d'exemple, une bobine classique de 100 mètres de fil électrique occupe en moyenne un volume de 2 litres et les dispositifs existants de stockage de bobines présentent le plus souvent des formes peu pratiques pour le transport simultané de multiples dispositifs, que ce soit dans la voiture ou camionnette, ou à la main.

Le document EP 2 017 211 A1 divulgue un dispositif selon le préambule de la revendication 1.

La présente invention a pour but de remédier aux inconvénients précités de l'art antérieur.

Dans ce but, la présente invention propose un dispositif de stockage, transport et installation de fils ou câbles électriques conforme à la revendication 1.

Ainsi, la présente invention couvre, sous une forme robuste, compacte et très simple d'utilisation, l'ensemble des fonctionnalités de stockage, de transport et d'installation de fils ou câbles électriques.

Elle offre un gain de temps lors de l'installation du fait de la suppression de l'entortillement du fil ou câble et présente une empreinte environnementale réduite grâce à l'absence d'emballage en plastique des bobines et à la possibilité de réutiliser le dispositif avec de nouvelles bobines une fois que celles qui sont montées dans celui-ci sont vides.

Elle permet en outre de diminuer le volume requis pour le stockage des bobines.

Par ailleurs, le fil ou câble est aisément accessible en permanence sachant qu'il s'agit d'un dispositif ouvert.

Dans un mode particulier de réalisation, les tubes métalliques sont en aluminium.

Cela permet d'obtenir un dispositif tout à la fois léger et robuste.

Dans un mode particulier de réalisation, les première et seconde plaques comportent chacune au moins une protubérance hémisphérique s'emboîtant à chaque extrémité de l'au moins un cylindre, l'au moins un cylindre étant creux, présentant un diamètre intérieur égal au diamètre des protubérances hémisphériques et étant mobile en rotation autour des protubérances hémisphériques.

Ce mécanisme d'emboîtement sur les protubérances permet un montage et un démontage facile et rapide des bobines.

L'au moins une poignée de transport est formée par une ouverture dans la première et/ou seconde plaque.

Cela permet de doter le dispositif d'un outil de transport sans en augmenter l'encombrement ni la masse.

Le dispositif peut comporter en outre au moins une sangle de transport passant par cette ouverture.

Ainsi, l'installateur peut aisément transporter simultanément plus d'un dispositif.

Selon l'invention, les première et seconde plaques présentent une forme globalement carrée, le dispositif comporte trois cylindres respectivement montés dans trois angles de cette forme globalement carrée et la poignée est unique et prévue dans le quatrième angle de cette forme globalement carrée.

Cela confère au dispositif une forme d'ensemble sensiblement cubique qui est particulièrement compacte.

En variante, selon l'invention, les première et seconde plaques présentent une forme globalement rectangulaire, le dispositif comporte au moins trois cylindres montés de façon alignée le long des côtés de plus grande longueur de cette forme globalement rectangulaire et l'au moins une poignée est prévue d'au moins un côté de l'ensemble formé par les au moins trois cylindres.

Ainsi, l'installateur a une visibilité immédiate sur toutes les bobines de fil ou câble d'un seul coup d'œil.

Dans un mode particulier de réalisation, le dispositif comporte en outre, pour chacun de l'au moins un cylindre, une tige équipée d'un œillet guide-fil disposée sur un des tubes métalliques.

Le passage du fil ou câble à travers l'œillet guide-fil lors de son déroulement permet de rassembler les fils ou câbles électriques afin de faciliter leur installation et pour les couper plus facilement également.

Dans un mode particulier de réalisation, le dispositif comporte en outre une clé adaptée à s'insérer dans un orifice prévu dans la face plane de chacune des protubérances hémisphériques pour rembobiner l'au moins un cylindre.

Cela permet de faciliter le rembobinage du fil ou câble électrique.

Dans un mode particulier de réalisation, les première et seconde plaques présentent une forme adaptée à l'empilement horizontal et vertical de plusieurs exemplaires du dispositif.

Cela réduit d'autant le volume nécessaire au stockage de multiples bobines.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une représentation schématique d'un dispositif conforme à la présente invention, dans un mode particulier de réalisation ;
[Fig. 2] est une représentation schématique d'un dispositif conforme à la présente invention, dans un autre mode particulier de réalisation ;
[Fig. 3] est une vue schématique d'un empilement de deux dispositifs conformes à la présente invention, dans un mode particulier de réalisation ; et
[Fig. 4] est une vue schématique partielle du dispositif conforme à la présente invention montrant des détails de réalisation.

### Description de mode(s) de réalisation

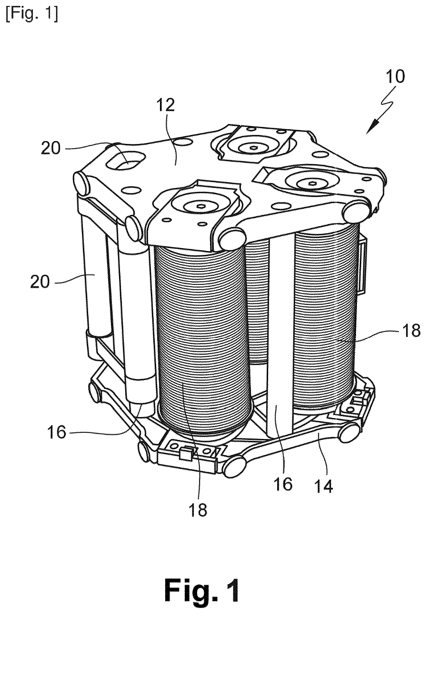

Comme le montre la figure 1, dans un mode particulier de réalisation, un dispositif 10 de stockage, transport et installation de fils ou câbles électriques conforme à la présente invention comporte une première plaque 12 en matière plastique, de préférence durable et une seconde plaque 14 également en matière plastique, de préférence durable.

Les première et seconde plaques 12, 14 sont parallèles.

En outre, le dispositif 10 comporte quatre tubes 16 métalliques reliant entre elles les première et seconde plaques 12, 14. A titre d'exemple nullement limitatif, chacun des tubes 16 peut être fixé dans les première et seconde plaques 12, 14 au moyen d'éléments de fixation tels que vis, boulons ou écrous venant s'insérer dans des orifices prévus à cet effet dans les première et seconde plaques 12, 14.

A titre d'exemple non limitatif, les tubes 16 métalliques peuvent être réalisés en aluminium.

Le dispositif 10 comporte en outre au moins un cylindre 18 sur lequel est enroulé un fil ou câble électrique. Le ou les cylindres 18 sont montés sur la première plaque 12 et sur la seconde plaque 14. Chaque cylindre 18 est mobile en rotation autour de son axe de révolution.

Le dispositif 10 comporte également au moins une poignée de transport 20.

Cette poignée 20 peut par exemple être prévue directement dans la première plaque 12 ou dans la seconde plaque 14, ou dans les deux plaques 12 et 14.

Cette poignée 20 peut par exemple être formée par une ouverture ménagée dans la plaque concernée, comme dans le mode particulier de réalisation de la figure 1.

De façon optionnelle, le dispositif 10 peut comporter en outre au moins une sangle de transport (non représentée) qui peut passer par cette ouverture.

En variante, la poignée 20 peut être accrochée à l'un des tubes 16 métalliques, ou plusieurs poignées 20 peuvent être accrochées aux tubes 16 métalliques. Une telle variante est également illustrée sur la figure 1.

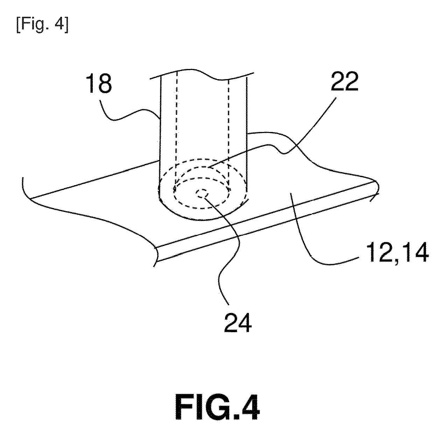

Dans un mode particulier de réalisation du dispositif 10 illustré partiellement sur la figure 4, chaque cylindre 18 peut être fixé sur les plaques 12 et 14 au moyen d'une protubérance 22 de forme hémisphérique présente sur chacune des deux plaques 12 et 14. Dans ce mode de réalisation, le cylindre 18 est creux, présente un diamètre intérieur égal au diamètre des protubérances 22, vient ainsi s'emboîter sur ces protubérances 22 et est mobile en rotation autour de celles-ci.

Selon l'invention et comme montré dans la figure 1, les première et seconde plaques 12, 14 présentent une forme globalement carrée et le dispositif 10 comporte trois cylindres 18 respectivement montés dans trois angles de cette forme globalement carrée, le dispositif 10 présentant dans ce mode de réalisation des poignées 20 prévues dans le quatrième angle de cette forme globalement carrée, dont une poignée 20 ménagée directement dans la première plaque 12 et une poignée 20 accrochée à l'un des tubes métalliques 16. Autrement dit, les trois cylindres 18 sont disposés de façon triangulaire sur les plaques carrées 12, 14.

A titre d'exemple nullement limitatif, les plaques 12 et 14 du mode de réalisation de la figure 1 peuvent présenter une épaisseur de 2 cm et une longueur de côté de 260 mm et les tubes 16 métalliques peuvent présenter une longueur de 260 mm. L'ensemble du dispositif 10 du mode de réalisation de la figure 1 est ainsi sensiblement cubique.

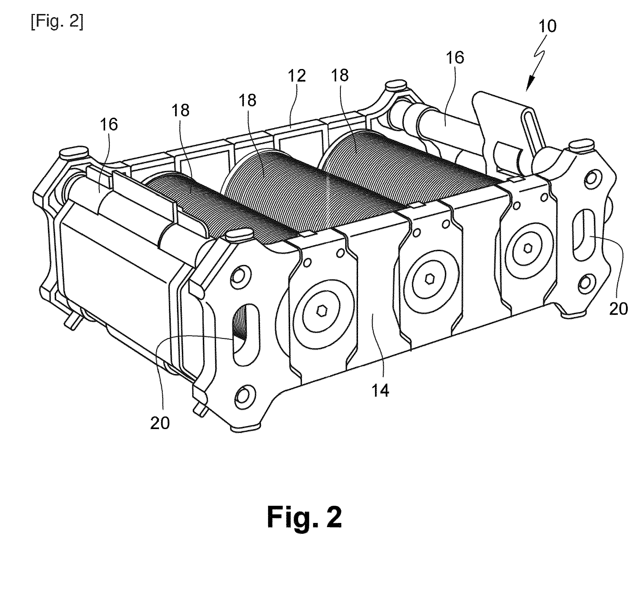

En variante de l'invention, la figure 2 montre un dispositif 10, dans lequel les première et seconde plaques 12, 14 présentent une forme globalement rectangulaire. Dans cet autre mode de réalisation, le dispositif 10 comporte au moins trois cylindres 18 montés de façon alignée le long des côtés de plus grande longueur de la forme globalement rectangulaire. Dans cet autre mode de réalisation, on peut prévoir, sur la première et/ou sur la seconde plaque 12, 14, soit une seule poignée 20 d'un côté de l'ensemble formé par les cylindres 18 alignés, soit deux poignées 20 ménagées de part et d'autre de cet ensemble (comme représenté).

A titre d'exemple nullement limitatif, les plaques 12 et 14 du mode de réalisation de la figure 2 peuvent présenter une épaisseur de 2 cm, une longueur de 400 mm et une largeur de 260 mm et les tubes 16 métalliques peuvent présenter une longueur de 260 mm.

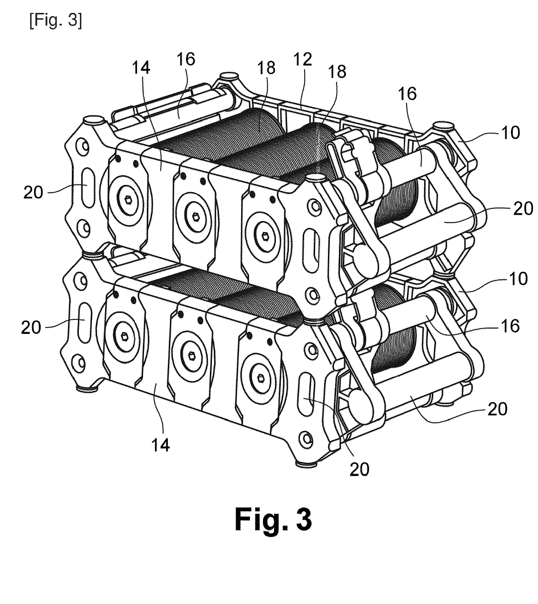

De façon optionnelle, les plaques 12 et 14 peuvent présenter une forme adaptée à l'empilement horizontal et vertical de plusieurs exemplaires du dispositif 10. Comme le montrent les figures 1 et 2, cette forme adaptée peut par exemple inclure de petits côtés additionnels prévus à chaque angle de la forme globalement carrée ou de la forme globalement rectangulaire des plaques 12 et 14. La figure 3 illustre un exemple d'empilement horizontal de deux exemplaires du dispositif 10 conforme au mode particulier de réalisation de la figure 2.

De façon optionnelle, le dispositif 10 peut comporter en outre un système de guide-fil (non représenté) disposé sur l'un des tubes 16 métalliques et consistant par exemple en une tige fixée sur le tube 16 métallique, cette tige présentant à son extrémité un œillet guide-fil.

Comme le montre la figure 4, de façon optionnelle, pour permettre un rembobinage aisé des cylindres 18, le dispositif 10 peut comporter en outre un orifice 24 dans la face plane de chacune des protubérances 22 hémisphériques et une clé (non représentée) de forme complémentaire à celle de l'orifice 24, adaptée à s'y insérer pour faire tourner le cylindre 18 et ainsi rembobiner le fil ou câble électrique enroulé autour de ce cylindre 18. A titre d'exemple nullement limitatif, l'orifice 24 et la section transversale de la clé peuvent présenter une forme hexagonale.

De façon optionnelle, le dispositif 10 peut en outre comporter, sur le panneau supérieur 14 et/ou sur le panneau de base 12, au moins un œillet accroche-fil 50 adapté à recevoir une extrémité du fil ou câble enroulé sur l'un des cylindres 18.

## Revendications

1. Dispositif (10) de stockage, transport et installation de fils ou câbles électriques, comportant :
une première plaque (12) en matière plastique ;
une seconde plaque (14) en matière plastique parallèle à ladite première plaque (12) ;
quatre tubes (16) métalliques reliant entre elles lesdites première et seconde plaques (12, 14) ;
au moins un cylindre (18) sur lequel est enroulé un fil ou câble électrique, ledit cylindre (18) étant monté sur ladite première plaque (12) et sur ladite seconde plaque (14) et étant mobile en rotation autour de son axe de révolution ; et
au moins une poignée (20) de transport,
ledit dispositif (10) étant **caractérisé en ce que** lesdites première et seconde plaques (12, 14) présentent une forme globalement carrée, **en ce qu'**il comporte trois cylindres (18) respectivement montés dans trois angles de ladite forme globalement carrée et **en ce que** ladite poignée (20) est unique et prévue dans le quatrième angle de ladite forme globalement carrée, ou **en ce que** lesdites première et seconde plaques (12, 14) présentent une forme globalement rectangulaire, **en ce qu'**il comporte au moins trois cylindres (18) montés de façon alignée le long des côtés de plus grande longueur de ladite forme globalement rectangulaire et **en ce que** ladite au moins une poignée (20) est prévue d'au moins un côté de l'ensemble formé par lesdits au moins trois cylindres (18).

2. Dispositif (10) selon la revendication 1, **caractérisé en ce que** lesdits tubes (16) métalliques sont en aluminium.

3. Dispositif (10) selon la revendication 1 ou 2, **caractérisé en ce que** lesdites première et seconde plaques (12, 14) comportent chacune au moins une protubérance (22) hémisphérique s'emboîtant à chaque extrémité dudit au moins un cylindre (18), ledit au moins un cylindre (18) étant creux, présentant un diamètre intérieur égal au diamètre desdites protubérances (22) hémisphériques et étant mobile en rotation autour desdites protubérances (22) hémisphériques.

4. Dispositif (10) selon l'une quelconque des revendications précédentes, **caractérisé en ce qu'**il comporte en outre, pour chacun dudit au moins un cylindre (18), une tige équipée d'un œillet guide-fil disposée sur l'un desdits tubes (16) métalliques.

5. Dispositif (10) selon la revendication 3, **caractérisé en ce qu'**il comporte en outre une clé adaptée à s'insérer dans un orifice (24) prévu dans la face plane de chacune desdites protubérances (22) hémisphériques pour rembobiner ledit au moins un cylindre (18).

6. Dispositif (10) selon l'une quelconque des revendications précédentes, **caractérisé en ce que** lesdites première et seconde plaques (12, 14) présentent une forme adaptée à l'empilement horizontal et vertical de plusieurs exemplaires dudit dispositif (10).

## Patentansprüche

1. Vorrichtung (10) zum Lagern, Transportieren und Verlegen von elektrischen Drähten oder Kabeln, enthaltend:
eine erste Platte (12) aus Kunststoff;
eine zweite Platte (14) aus Kunststoff, die parallel zu der ersten Platte (12) angeordnet ist;
vier Metallrohre (16), welche die erste und die zweite Platte (12, 14) miteinander verbinden;
zumindest einen Zylinder (18), auf welchem ein elektrischer Draht oder ein elektrisches Kabel aufgewickelt ist, wobei der Zylinder (18) an der ersten Platte (12) und der zweiten Platte (14) angebracht ist und um seine Rotationsachse herum drehbeweglich ist; sowie zumindest einen Tragegriff (20),
wobei die Vorrichtung (10) **dadurch gekennzeichnet ist, dass** die erste und die zweite Platte (12, 14) eine insgesamt quadratische Form aufweisen, dass die Vorrichtung drei Zylinder (18) enthält, die jeweils an drei Ecken der insgesamt quadratischen Form angebracht sind, und dass der Griff (20) ein Einzelgriff ist und an der vierten Ecke der insgesamt quadratischen Form vorgesehen ist, oder dass die erste und die zweite Platte (12, 14) eine insgesamt rechteckige Form aufweisen, dass die Vorrichtung zumindest drei Zylinder (18) enthält, die aneinandergereiht entlang der längeren Seiten der insgesamt rechteckigen Form angebracht sind, und dass der zumindest eine Griff (20) an zumindest einer Seite der von den zumindest drei Zylindern (18) gebildeten Anordnung vorgesehen ist.

2. Vorrichtung (10) nach Anspruch 1, **dadurch gekennzeichnet, dass** die Metallrohre (16) aus Aluminium sind.

3. Vorrichtung (10) nach Anspruch 1 oder 2, **dadurch gekennzeichnet, dass** die erste und die zweite Platte (12, 14) jeweils zumindest einen halbkugelförmigen Vorsprung (22) enthalten, der in ein jedes Ende des zumindest einen Zylinders (18) eingreift, wobei der zumindest eine Zylinder (18) hohl ist, einen Innendurchmesser aufweist, der dem Durchmesser der halbkugelförmigen Vorsprünge (22) entspricht und um die halbkugelförmigen Vorsprünge (22) herum drehbeweglich ist.

4. Vorrichtung (10) nach einem der vorhergehenden Ansprüche, **dadurch gekennzeichnet, dass** die Vorrichtung für jeden der zumindest einen Zylinder (18) ferner einen mit einer Drahtführungsöse ausgestatteten Stab enthält, der auf einem der Metallrohre (16) angeordnet ist.

5. Vorrichtung (10) nach Anspruch 3, **dadurch gekennzeichnet, dass** die Vorrichtung ferner einen Schlüssel enthält, der dafür angepasst ist, in eine in der ebenen Fläche eines jeden der halbkugelförmigen Vorsprünge (22) vorgesehene Öffnung (24) eingeführt zu werden, um den zumindest einen Zylinder (18) wieder aufzuwickeln.

6. Vorrichtung (10) nach einem der vorhergehenden Ansprüche, **dadurch gekennzeichnet, dass** die erste und die zweite Platte (12, 14) eine Form aufweisen, die für das horizontale und vertikale Stapeln mehrerer Einheiten der Vorrichtung (10) geeignet ist.

## Claims

1. A device (10) for storing, transporting and installing electrical wires or cables, comprising:
a first plastic plate (12);
a second plastic plate (14) parallel to said first plate (12);
four metal tubes (16) interconnecting said first and second plates (12, 14);
at least one cylinder (18) on which an electric wire or cable is wound, said cylinder (18) being mounted on said first plate (12) and on said second plate (14) and being rotatable about its revolution axis; and
at least one carrying handle (20),
said device (10) being **characterised in that** said first and second plates (12, 14) have a generally square shape, **in that** it comprises three cylinders (18) respectively mounted in three corners of said generally square shape and **in that** said handle (20) is single and provided in the fourth corner of said generally square shape, or **in that** said first and second plates (12, 14) have a generally rectangular shape, **in that** it comprises at least three cylinders (18) mounted in an aligned manner along the longer sides of said generally rectangular shape and **in that** said at least one handle (20) is provided on at least one side of the assembly formed by said at least three cylinders (18).

2. The device (10) according to claim 1, **characterised in that** said metal tubes (16) are made of aluminium.

3. The device (10) according to claim 1 or 2, **characterised in that** said first and second plates (12, 14) each comprise at least one hemispherical protuberance (22) engaging at each end of said at least one cylinder (18), said at least one cylinder (18) being hollow, having an inner diameter equal to the diameter of said hemispherical protuberances (22) and being rotatable about said hemispherical protuberances (22).

4. The device (10) according to any one of the preceding claims, **characterised in that** it further comprises, for each of said at least one cylinder (18), a rod equipped with a wire guide eyelet arranged on one of said metal tubes (16).

5. The device (10) according to claim 3, **characterised in that** it further comprises a key adapted to be inserted into an orifice (24) provided in the plane face of each of said hemispherical protuberances (22) to rewind said at least one cylinder (18).

6. The device (10) according to any one of the preceding claims, **characterised in that** said first and second plates (12, 14) have a shape adapted to the horizontal and vertical stacking of several copies of said device (10).
